# EUROPÄISCHE PATENTSCHRIFT

(11) **EP 0 332 756 B1**
(45) Veröffentlichungstag und Bekanntmachung des Hinweises auf die Patenterteilung: **24.02.1993**
(21) Anmeldenummer: 88121191.6
(22) Anmeldetag: 17.12.1988
(51) Int. Cl.: F16K 37/00

(54) **Positionsmelder an Ventilen, insbesondere Doppelsitzventilen mit beweglichen Ventiltellern**
Position indicator for valves, especially for double seat valves having moving valve discs
Indicateur de position pour vannes, particulièrement pour vannes à doubles sièges comportant des disques mobiles

(30) Priorität: 21.12.1987 DE 3743312
(43) Veröffentlichungstag der Anmeldung: 20.09.1989
(73) Patentinhaber: APV ROSISTA GMBH, 59425 Unna (DE)
(72) Erfinder: Bräkelmann,Wolfgang, D-4750 Unna-Uelzen (DE); Schulz,Dieter, D-4630 Bochum 7 (DE); Kurreck,Manfred, D-5840 Schwerte (DE)
(74) Vertreter: Henfling, Fritz, Dipl.-Ing.

(56) Entgegenhaltungen:
- DE-A- 2 042 590
- DE-A- 3 326 332
- US-A- 3 921 665
- US-A- 4 470 367

## Beschreibung

Die Erfindung bezieht sich auf ein Ventil mit einem Positionsmelder entsprechend dem Oberbegriff des Anspruchs 1. Ein solches Ventil ist der DE-A-3 326 332 zu entnehmen.

Positionsmelder finden unter anderem auch Anwendung bei Doppelsitzventilen, die in den über sie zusammengefaßten Leitungssträngen unterschiedliche Medien aufnehmen können und aus diesem Grund einer laufenden überwachung der jeweiligen Schaltpositon bedürfen. Zu diesem Zwecke werden solche Ventile oder auch die aus mehreren Ventilen bestehenden Ventilknoten mit Positionsmeldern ausgestattet, deren Aufgabe es ist, die jeweilige Position des Ventiltellers, in erster Linie die Schließlage und unkontrollierte Abweichungen davon, einer Zentrale zu melden, von welcher die gesamten Ventilpositionen überwacht werden.

Als Schaltelemente werden dabei an den Ventilen Endschalter oder Näherungsinitiatoren eingesetzt. Beim Einsatz von Endschaltern ist deren Verstellweg häufig nicht exakt einstellbar und von Endschalter zu Endschalter verschieden. Insbesondere bei Wartungsarbeiten an den Ventilen ist aber auch eine relativ leichte Verstellung des Schaltpunktes eines solchen Endschalters möglich, woraus die Gefahr resultiert, daß die tatsächliche Schaltposition des Ventils nicht zutreffend gemeldet wird. Nicht anders verhält es sich mit Positionsmeldern nach Art des aus der DE-A-3 326 332 entnehmbaren Positionsmelders. Ebenso verhält es sich bei dem Einsatz von Näherungsinitiatoren, deren Schaltbereich in äußerst engen Grenzen liegt und insofern genauestens ermittelt werden muß. Dies führt dazu, daß beim Einbau bzw. späteren Wartungsarbeiten der exakte Schaltpunkt des Näherungsinitiators durch eine elektrische Messung immer wieder bestimmt werden muß, womit ebenfalls ein erheblicher Arbeitsaufwand verbunden ist.

Der Erfindung liegt die Aufgabe zugrunde, eine exakte Justierung solcher Schaltelemente von Positionsmeldern auf einfache Weise möglich zu machen, wobei selbst nach längerer Zeit oder nach Wartungsarbeiten immer wieder eine exakte Bestimmung des Schaltpunktes des Schaltelementes gewährleistet ist und auch eine Sichtkontrolle gegeben sein soll, durch die jederzeit festgestellt werden kann, ob der Positionsmelder, konkret das Bestandteil des Positionsmelders bildende Schaltelement, die für seine einwandfreie Funktion erforderliche Lageorientierung nach wie vor aufweist.

Die Aufgabe wird bei einem gattungsgemäßen, mit einem Positionsmelder versehenen Ventil erfindungsgemäß durch eine kontsruktive Auslegung der Ventiltellerstange und des Positionsmelders entsprechend dem kennzeichnenden Teil des Anspruches 1 gelöst.

Die Ausbildung der korrespondierenden Anschläge an der Verstellstange einerseits und am Schaltelement bzw. am Schaltelementgehäuse andererseits in Verbindung mit der Einstellbeweglichkeit des Schaltelementes bzw. des Schaltelementgehäuses ermöglicht in einfacher Weise die den exakten Schaltpunkt des Schaltelementes voraussetzende Lageorientierung des Schaltelementes. Die Zuordnung des Positionsmelders zum sich zwischen dem Ventilgehäuse und der Stellvorrichtung erstreckenden Zwischenstück, der sogenannten Laterne, bietet dabei sowohl die Möglichkeit einer überprüfung des Einstellvorganges als auch die anschließende überwachung des Positionsmelders im laufenden Betrieb darauf, ob seine exakte Lageorientierung nach wie vor gegeben ist. Diese Art und Weise der Lageorientierung des Positionsmelders ist dann auch ohne weiteres immer wieder reproduzierbar, was sich als vorteilhaft bei Wartungsarbeiten erweist. Eine elektrische überprüfung des Schaltpunktes erübrigt sich hierbei.

Vorteilhafte konstruktive Lösungen der einstellbeweglichen Lageorientierung des Bestandteil des Positionsmelders bildenden Schaltelementes bzw. des das Schaltelement aufnehmenden Gehäuses ergeben sich aus den Ansprüchen 3 bis 5.

In der Zeichnung ist die Erfindung anhand von Ausführungsbeispielen weitergehend erläutert. Es zeigen:
- Figur 1: ein teilweise dargestelltes Ventil mit ihm zugeordneten Positionsmelder in Seitenansicht,
- Figur 2: die Darstellung in Figur 1 in Draufsicht und Schnitt der Laterne,
- Figur 3: eine der Figur 1 entsprechende Darstellung mit einer abgewandelten Ausführungsform des Positionsmelders,
- Figur 4: die Darstellung in Figur 3 in Draufsicht und Schnitt der Laterne.

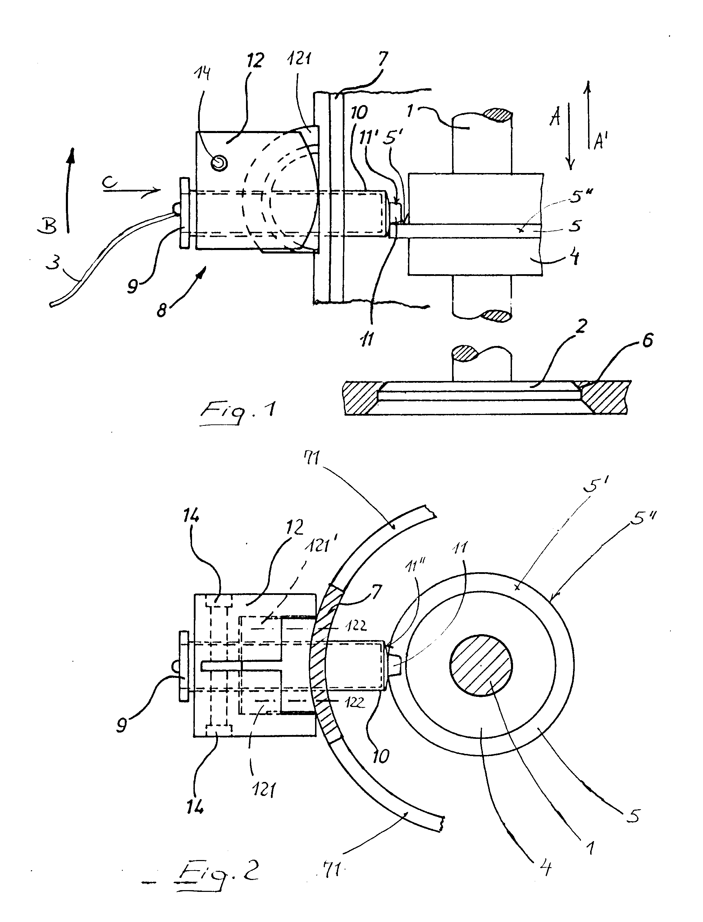

In den Figuren 1 bis 4 sind mit 6 der Sitz eines Ventils bezeichnet, mit 2 der Ventilteller, mit 1 die vom Ventilteller 2 ausgehende Verstellstange, an der am vom Ventilteller 2 abgekehrten Ende eine nicht dargestellte Stellvorrichtung angreift, mit der der Ventilteller 2 betätigt wird, also im Sinne des Pfeiles A in Figur 1 in die Öffnungsstellung überführt wird und im Sinne des Pfeiles A' in die dargestellte Schließlage. Zusammengefaßt ist die nicht dargestellte Stellvorrichtung mit dem nicht dargestellten Ventilgehäuse über ein Zwischenstück 7, die sogenannte Laterne, von der in der Zeichnung ein Teilbereich der Wandung dargestellt ist. Mit 71 sind Sichtöffnungen in der Laterne bezeichnet. Im Abstand vom Ventilteller 2 weist die Verstellstange 1 eine Aufweitung 4 auf, über deren Umfang weitergehend eine Ringwulst 5 unter Ausbildung einer Schulter 5' sowie einer Umfangsfläche 5" vorspringt. Dem Zwischenstück 7 ist der Positionsmelder 8 zugeordnet. Der Positionsmelder 8 besteht aus einem in einen mit der vom Ventilteller 2 abgekehrten Schulter 5' und der Umfangsfläche 5" an der Verstellstange 1 korres-pondierende Anschlagflächen 11' und 11" ausbildenden Ansatz 11 auslaufenden Schaltelementgehäuse 10, das sich durch die Wandung des Zwischenstücks 7 in zwischen dem Ventilgehäuse und der Stellvorrichtung befindliche Zwischenstück 7 hinein erstreckt. In dem Schaltelementgehäuse 10 ist das eigentliche Schaltelement 9 ingestalt eines Näherungsinitiators angeordnet. In der dargestellten Schaltsituation, also bei geschlossenem Ventil, nämlich gegen den Ventilsitz 6 anliegendem Ventilteller 2, ist der über die Aufweitung 4 der Verstellstange 1 vorspringende Ringwulst 5 gegen den Ansatz 11 des Schaltelementgehäuses 10 aufgelaufen. Der dabei vom Schaltelement 9 ausgelöste, über eine Signalleitung 3 weitergeleitete Impuls zeigt an, daß das Ventil geschlossen ist, also der Ventilteller 2 gegen den Ventilsitz 6 anliegt. Voraussetzung dafür, daß die vom Positionsmelder 8 vermittelte Anzeige die tatsächliche Schaltsituation wiedergibt, ist zum einen die Justierung des Schaltelementgehäuses 10 dergestalt, daß der über die Aufweitung 4 der Verstellstange 1 vorspringende Ringwulst 5 bei gegen den Ventilsitz 6 anliegendem Ventilteller 2 gegen den Ansatz 11 des Schaltelementgehäuses 10 anliegt und zum andern, insbesondere bei dem Einsatz eines Näherungsinitiators als Impulsauslöser, eines definierten Abstandes des Schaltelementes 9 von der Verstellstange 1. Dazu bedarf es beim Einbau des Ventils zum einen der Orientierung des Schaltelementgehäuseansatzes 11 auf das Niveau, das die Schulter 5' des über die Aufweitung 4 der Verstellstange 1 vorspringenden Ringwulstes 5 bei geschlossenem Ventil einnimmt und zum andern der Abstandsorientierung des Schaltelementes 9 zur Verstellstange 1, konkret der Schulter 11' des Schaltelementgehäuses 11 auf die Umfangsfläche 5" des Ringwulstes 5. Die Justierung des Positionsmelders 8 wird bei dem Ausführungsbeispiel nach den Figuren 1 und 2 dadurch ermöglicht, daß das Schaltelementgehäuse 10, in einem Halter 12 in Richtung des Pfeiles C verschiebbar gelagert ist, der sich auf an der Wandung des Zwischenstücks 7 zwischen dem Ventilgehäuse und der Stellvorrichtung angesetzten, daran mittels Schrauben 122 befestigten Lagern 121, 121' im Sinne des Pfeiles B in Figur 1 verschwenkbar führt und mittels Klemmschrauben 14 gegenüber den Lagern 121, 121' unter gleichzeitiger Festlegung des Schaltelementgehäuses 10 gegenüber dem Halter 12 festlegbar ist. Nach dem Anbau des Positionsmelders 8 an dem Zwischenstück 7 läßt sich das Schaltelementgehäuse 10 somit bei geschlossenem Ventil und gelösten Klemmschrauben 14 durch Verschwenken des Halters 12 im Sinne des Pfeiles B bis zur Anlage der Umfangsfläche 11' des Ansatzes 11 am Schaltelementgehäuse 10 gegen die Schulter 5' des über die Aufweitung 4 der Verstellstange 1 vorspringenden Ringwulstes 5 und anschließende Einstellung des Seitenabstandes des Schaltelementes 9 durch Verlagerung des Schaltelementgehäuses 10 im Sinne des Pfeiles C justieren. Nach der Justierung wird sodann der Halter 12 gegenüber den Lagern 121, 121' und in Verbindung damit das Schaltelementgehäuse 10 gegenüber dem Halter 12 durch Anziehen der Klemmschrauben 14 festgelegt, womit die Aufrechterhaltung der vorgenommenen Justierung sichergestellt ist. Über die Einstellbarkeit des Positionsmelders 8 lassen sich dann auch in einfacher Weise fertigungsbedingte Abweichungen bei der Zuordnung des Positionsmelders 8 zum Ventil ausgleichen. Die Zuordnung des Positonsmelders zum als Laterne ausgebildeten Zwischenstücks 7 zwischen dem Ventilgehäuse und der Stellvorrichtung ermöglicht die Sichtkontrolle der Einstellung des Positionsmelders 8. Eine Nachjustierung ist erforderlichenfalls ohne weiteres möglich.

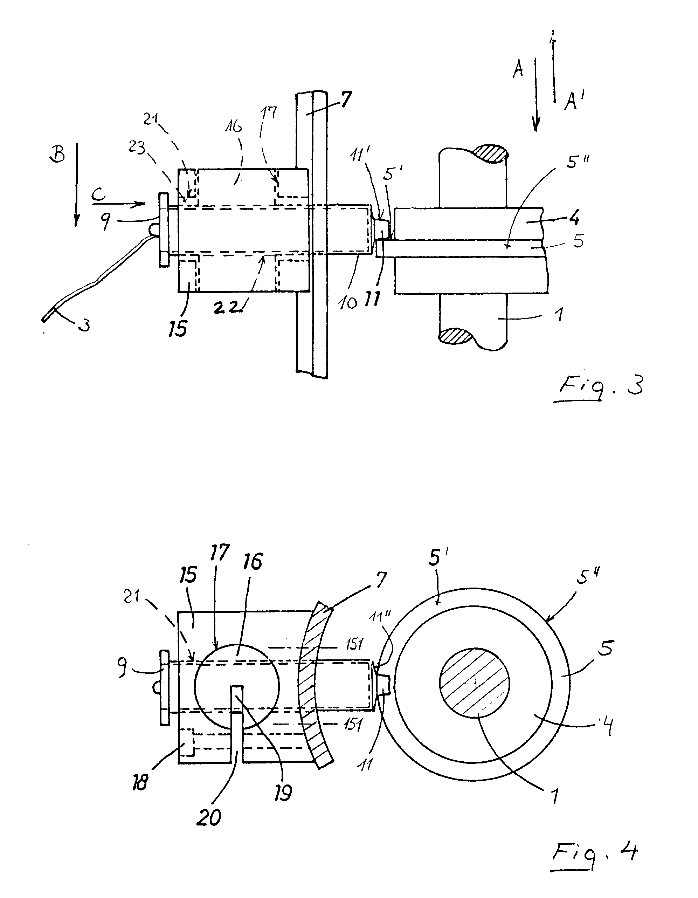

Bei dem Ausführungsbeispiel nach den Figuren 3 und 4 ist an dem Zwischenstück 7 zwischen dem Ventilgehäuse und der Stellvorrichtung ein Lagerbock 15 angeschraubt (151). Dieser Lagerbock 15 weist einen sich durch den Lagerbock erstreckenden Durchgang 17 mit zur Verstellstange 1 des Ventils parallelem Verlauf auf, sowie einen auf die Verstellstange 1 orientierten, den Durchgang 17 kreuzenden Durchgang 21. In dem Durchgang 17 führt sich ein als Paßstück ausgelegter Halter 16 mit einem auf den Querschnitt des Positionsmelders 9, konkret des Schaltelementgehäuses 10, ausgelegten Durchgang 22, während der mit diesem Durchgang 22 korrespondierende Durchgang 21 im Lagerbock 15 Spiel 23 in Richtung parallel zur Verstellstange 1 mit Bezug auf das Schaltelementgehäuse 10 aufweist. Der Lagerbock 15 und der Halter 16 sind mit Schlitzen 19 bzw. 20 versehen. Mit 18 ist eine sich durch den Lagerbock 15 erstreckende, den Schlitz 20 kreuzende Klemmschraube bezeichnet. Im Anschluß an die Fixierung 151 des Lagerbockes 15 am Zwischenstück 7 zwischen dem Ventilgehäuse und der Stellvorrichtung wird bei gelöster Klemmschraube 18 und geschlossenem Ventil durch Verlagerung des Paßstückes 16 im Sinne des Pfeiles B zunächst die Umfangsfläche 11' des Ansatzes 11 am Schaltelementgehäuse 10 zur Anlage gegen die vom über die Aufweitung 4 auf der Verstellstange 1 vorspringenden Ringwulst 5 gebildete Schulter 5' gebracht. Anschließend wird durch Verlagerung des Schaltelementgehäuses 10 im Sinne des Pfeiles C in Lagerbock 15 und Halter 16 die durch Anschlagflächen 11" am Schaltelementgehäuse 10 und die Umfangsfläche 5" des über die Aufweitung 4 auf der Verstellstange 1 vorspringenden Ringwulstes 5 definierte Abstandsjustierung vorgenommen. Sodann wird die Klemmschraube 18 angezogen, wodurch sowohl der Halter 16 im Lagerbock 15 als auch das Schaltelementgehäuse 10 im Halter 16 festgelegt wird.

## Patentansprüche

1. Ventil mit beweglichem Verschlußglied (2) und einer diesem zugeordneten Stellvorrichtung, wobei das Verschlußglied (2) über eine Verstellstange (1) mit der Stellvorrichtung verbunden ist, mit einem Positionsmelder ingestalt eines gegen die Verstellstange (1) vorspringenden, in Wechselwirkung mit Justierflächen (5) der Verstellstange (1) ansprechenden Schaltelements (9) zur Signalisierung einer Schaltsituation des Verschlußgliedes (2), dadurch gekennzeichnet, daß
die Justierflächen 5 der Verstellstange (1) von einem einen quer zur Stangenachse verlaufenden Anschlag (5') und einem einen parallel dazu verlaufenden Anschlag (5") ausbildenden Überstand (5) über die Stange (1) gebildet wird,
das Schaltelement (9) oder das das Schaltelement (9) aufnehmende Gehäuse (10) verstellstangenseitig mit diesen Anschlägen (5', 5") korrespondierende Anschläge (11', 11") ausbildend abgesetzt ist (11)
und das Schaltelement (9) oder das das Schaltelement (9) aufnehmende Gehäuse (10) an einem sich zwischen dem Ventilgehäuse und der Stellvorrichtung erstreckenden Zwischenstück (7) gegenüber der Verstellstange (1) einstellbeweglich gelagert ist.

2. Ventil nach Anspruch 1, dadurch gekennzeichnet, daß die Verstellstange (1) über eine Aufweitung (4) in einen die Anschläge (5', 5") ausbildenden Ringwulst (5) übergeht.

3. Ventil nach Anspruch 1 oder Anspruch 2, gekennzeichnet durch ein am Zwischenstück (7) zwischen dem Ventilgehäuse und der Stellvorrichtung angeordnetes Lager (121, 121') und einen auf dem Lager (121, 121') um eine quer zur Verstellstange (1) verlaufende Achse verschwenkbaren, gegenüber dem Lager festlegbaren Halter (12), in dem das Schaltelement (9) bzw. das Schaltelementgehäuse (10) in Richtung auf die Verstellstange (1) verlagerbar gelagert und festlegbar ist.

4. Ventil nach Anspruch 1 oder Anspruch 2, gekennzeichnet durch ein am Zwischenstück (7) zwischen dem Ventilgehäuse und der Stellvorrichtung angeordnetes Lager (15) mit einem parallel zur Verstellstange (1) verlaufenden Durchgang (17) und einem in Richtung auf die Verstellstange (1) verlaufenden Durchgang (21), einem sich in den Durchgang (17) passend einfügenden Halter (16) mit einem auf den Querschnitt des Schaltelementes (9) bzw. des Schaltelementgehäuses (10) ausgelegten Durchgang (22), wobei der korrespondierende Durchgang (21) im Lager (15) mit Spiel (23) in Richtung parallel zur Verstellstange 1 zwischen dem Schaltelement (9) bzw. dem Schaltelementgehäuse (10) und der Durchgangswandung ausgelegt ist, mit Mitteln zum Festlegen des Halters (16) gegenüber dem Lager (15) sowie des Schaltelementes (9) bzw. des Schaltelementgehäuses (10) gegenüber dem Halter (16).

5. Ventil nach einem der Ansprüche 1 bis 4, gekennzeichnet durch eine gemeinsame Klemmverbindung des Halters (12 bzw. 16) mit dem Lager (121, 121' bzw. 15) einerseits und des Schaltelementes (9) bzw. des Schaltelementgehäuses (10) mit dem Halter (12 bzw. 16) andererseits.

## Claims

1. Valve having a displaceable closure member (2) and an adjusting device associated therewith, the closure member (2) being connected to the adjusting device via an adjustment rod (1), and said valve having a position indicator in the form of a control member (9), which extends towards the adjustment rod and co-operates with adjustment faces (5) of the adjustment rod (1), for signalling a control position of the closure member (2), characterised in that the adjustment faces (5) of the adjustment rod (1) are formed by a projection (5) which forms a stop (5'), which extends transversely relative to the axis of the rod, and forms a stop (5"), which extends parallel thereto, said projection protruding beyond the rod (1); the control member (9), or the housing (10) accommodating the control member (9), is stepped (11) at the adjustment rod end so as to form stops (11', 11"), which correspond to these stops (5', 5"); and the control member (9), or the housing (10) accommodating the control member (9), is mounted on an intermediate part (7), which extends between the valve housing and the adjusting device, so as to be adjustably displaceable relative to the adjustment rod (1).

2. Valve according to claim 1, characterised in that the adjustment rod (1) extends into an annular bead (5), which forms the stops (5', 5"), via an enlarged portion (4).

3. Valve according to claim 1 or claim 2, characterised by a bearing (121, 121'), which is disposed on the intermediate part (7) between the valve housing and the adjusting device, and a holder (12), which is pivotable on the bearing (121, 121') about an axis extending transversely relative to the adjustment rod (1) and is securable relative to the bearing, the control member (9) or the control member housing (10) being mounted in said holder so as to be displaceable in a direction towards the adjustment rod (1) and being securable in said holder.

4. Valve according to claim 1 or claim 2, characterised by a bearing (15), which is disposed on the intermediate part (7) between the valve housing and the adjusting device and is provided with a passage (17) extending parallel to the adjustment rod (1) and a passage (21) extending in a direction towards the adjustment rod (1); a holder (16) which is inserted into the passage (17) so as to fit therein and has a passage (22) which is adapted to the cross-section of the control member (9), or respectively the control member housing (10); the corresponding passage (21) being provided in the bearing (15) with some clearance (23), in a direction parallel to the adjustment rod 1, between the control member (9), or respectively the control member housing (10), and the passage wall, having means for securing the holder (16) relative to the bearing (15) and for securing the control member (9), or respectively the control member housing (10), relative to the holder (16).

5. Valve according to one of claims 1 to 4, characterised by a common clamping connection between the holder (12 or 16) and the bearing (121, 121' or 15), on the one hand, and between the control member (9), or respectively the control member housing (10), and the holder (12 or 16), on the other hand.

## Revendications

1. Vanne comportant un organe mobile d'obturation (2) et, associé à cet organe, un dispositif de manoeuvre, l'organe d'obturation (2) étant relié au dispositif de manoeuvre par l'intermédiaire d'une tige de commande (1), un indicateur de position étant prévu sous la forme d'un élément de commutation (9) dirigé contre la tige de commande (1) et interagissant avec des surfaces de positionnement (5) portées par la tige de commande (1) de manière à signaler une position de commutation de l'organe d'obturation (2), caractérisée en ce que
les surfaces de positionnement (5) portées par la tige de commande (1) sont formées par une partie en saillie (5) de la tige (1), qui forme elle-même une butée (5') s'étendant perpendiculairement à l'axe de la tige et une butée (5") s'étendant parallèlement à la précédente,
l'élément de commutation (9) ou le boîtier (10) logeant cet élément de commutation (9) comporte, du côté de la tige de commande, une conformation étagée (11) avec des butées (11',11") correspondant aux butées précitées (5', 5")
et l'élément de commutation (9) ou le boîtier (10) logeant cet élément de commutation (9) est monté, avec possibilité de réglage par déplacement, sur une pièce intermédiaire (7) s'étendant entre le corps de la vanne et le dispositif de manoeuvre.

2. Vanne selon la revendication 1, caractérisée en ce que la tige de commande (1) présente une partie élargie (4), qui s'élargit elle-même par un renflement annulaire (5) formant les butées (5',5").

3. Vanne selon la revendication 1 ou la revendication 2, caractérisée par un palier (121,121') monté sur la pièce intermédiaire (7) entre le corps de la vanne et le dispositif de manoeuvre, et par un support (12) monté pivotant sur le palier (121,121') autour d'un axe s'étendant transversalement à la tige de commande (1), le support pouvant être immobilisé par rapport au palier, et l'élément de commutation (9) ou le boîtier (10) de cet élément étant monté déplaçable et immobilisable dans ce support, suivant la direction de la tige de commande (1).

4. Vanne selon la revendication 1 ou la revendication 2, caractérisée par un palier (15) monté sur la pièce intermédiaire (7) entre le corps de la vanne et le dispositif de manoeuvre, avec un passage (17) qui s'étend parallèlement à la tige de commande (1) et avec un passage (21) s'étendant en direction de cette tige de commande (1), ainsi qu'un support (16) inséré de manière ajustée dans le passage (17) ot comportant lui même un passage (22) dimensionné selon la section de l'élément de commutation (9) ou du boîtier (10) de cet élément, le passage correspondant (21) ménagé dans le palier (15) étant dimensionné avec un jeu (23) selon une direction parallèle à la tige de commande (1) entre l'élément de commutation (9) ou son boîtier (10) et la paroi du passage, des moyens étant prévus pour immobiliser le support (16) par rapport au palier (15), ainsi que pour immobiliser l'élément de commutation (9) ou son boîtier (10) par rapport au support (16).

5. Vanne selon l'une des revendications 1 à 4, caractérisée par une liaison commune, par serrage, du support (12 ou 16) avec le palier (121,121' ou 15), d'une part, et de l'élément de commutation (9) ou du boîtier (10) de cet élément avec le support (12 ou 16), d'autre part.
